# EUROPEAN PATENT APPLICATION

(11) **EP 4 089 714 A1**
(43) Date of publication of application: **16.11.2022**
(21) Application number: 21173891.9
(22) Date of filing: 14.05.2021
(51) Int. Cl.: H01J 49/00, G01N 27/623

(54) **METHOD AND APPARATUS FOR COMBINED ION MOBILITY AND MASS SPECTROMETRY ANALYSIS**

(71) Applicant: Universitätsmedizin der Johannes Gutenberg-Universität Mainz, 55131 Mainz (DE)
(72) Inventor: TENZER, Stefan, 55120 Mainz (DE); DISTLER, Ute, 55128 Mainz (DE)
(74) Representative: Lucke, Andreas

(57) **Abstract**

Disclosed herein is a method of and an apparatus for combined ion mobility and mass spectrometry analysis, the method comprising the following steps: introducing precursor ions (34) into a trap configured for trapping ions and for selectively ejecting trapped ions according to their m/z ratio, selectively ejecting precursor ions (34) having m/z values falling within at least one controllable ejection window from said trap (15), sequentially releasing precursor ions (34) from said IMS (16) according to their ion mobility, introducing said released precursor ions (34) into a mass filter (26) having a controllable mass window, fragmenting the precursor ions (34) transmitted through said mass filter (26) to generate fragment ions, and carrying out a mass spectrometry measurement on said fragment ions, wherein each fragment ion is associated with a mass window and an ion mobility (IM) range.

## Description

### FIELD OF THE INVENTION

The present invention is in the field of mass spectrometry. More particularly, the present invention relates to a method of combined ion mobility and mass spectrometry analysis.

### BACKGROUND OF THE INVENTION

Mass spectrometry has become powerful analytical technology in biomedical research, enabling the analysis of highly complex samples. In proteomics, mass spectrometry-based methods enable the identification and quantification of thousands of proteins. However, achieving a high coverage of complete proteomes is very challenging due to the limited speed, sensitivity and resolution of current mass spectrometers. In bottom-up proteomics, peptides are generated from proteins by specific proteolytic enzymes and are typically separated by liquid chromatography which is interfaced to a mass spectrometer with an electrospray ionization source. Liquid chromatography provides elution peak widths in the range of seconds, while mass spectra are acquired in about 100 µs with time-of-flight (TOF) instruments. This allows adding ion mobility as a third dimension of separation in between. In Meier et al. Online parallel accumulation - serial fragmentation (PASEF) with a novel trapped ion mobility mass spectrometer, http://dx.doi.org/10.1101/336743, a scan mode termed parallel accumulation - serial fragmentation (PASEF) has been described which utilizes the timsTOF Pro instrument of Bruker Daltonik, an apparatus that combines a trapped ion mobility separator (IMS) with a quadrupole mass filter and a time-of-flight mass analyzer. This scanning mode has been found to allow for high sequencing speed at good sensitivity and has also been used to comprehensively analyze other types of biomolecules, such as lipids, or metabolites (DOI: 10.1038/s41467-019-14044-x).

However, the PASEF scanning mode in its original form is per se a so-called data -dependent acquisition mode, where particular precursors are sequentially selected. In particular for screening or clinical applications, so-called data independent acquisition (DIA) schemes are preferred, in which groups of ions are recursively isolated by the mass filter and concurrently fragmented, thereby generating convoluted fragment ion spectra composed of fragments from many different precursors. A data-independent variant of the PASEF method, referred to as diaPASEF, is described in Florian Meier et al., diaPASEF: parallel accumulation-serial fragmentation combined with data-independent acquisition, Nat Methods. 2020 Dec;17 (12):1229-1236, doi: 10-1038/s41592-020-00998-0.. In this work, also a deconvolution scheme for the mass spectra is described. The deconvolution comprises associating the fragments found in the mass spectrum with a corresponding precursor.

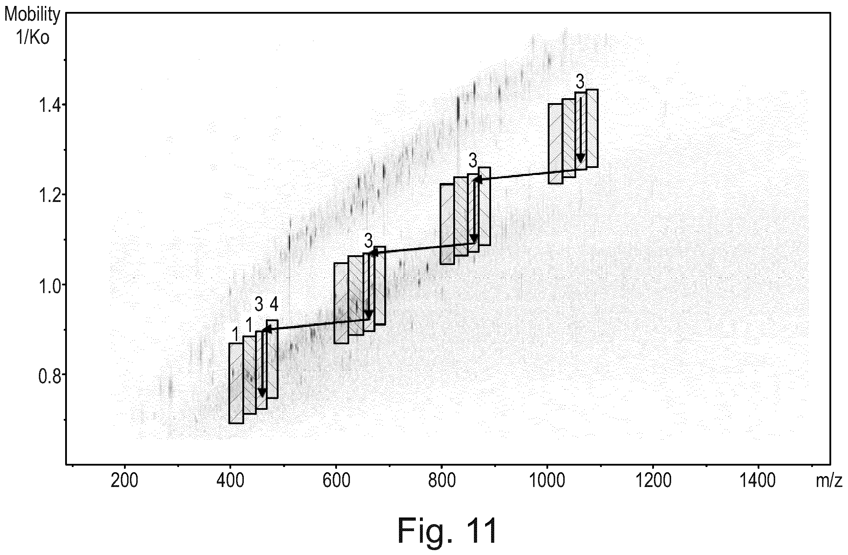

For a more detailed understanding of diaPASEF, reference is made to Fig. 11 showing an m/z-mobility diagram of observed/measured precursor ion intensities. The m/z-mobility diagram can be obtained in a so-called MS1 mode of operation, in which the mass filter and the fragmentation are deactivated, such that all precursor ions sequentially released from the IMS are subjected to mass spectrometry without fragmentation, to thereby obtain m/z spectra as a function of ion mobility of the precursor ions.

In the diagram of Fig. 11, the horizontal axis defines the m/z value of the precursor while the vertical axis defines the inverse ion mobility (1/Kₒ), such that larger values on the vertical axis correspond to lower mobilities. In the diagram of Fig. 11, individual precursors are represented by vertically elongated spots, i.e. with a certain spread in mobility direction, since ions accumulate in the IMS with a certain spatial distribution resulting in the mobility measured with the IMS for the same precursor exhibiting a certain variance. Namely, a precursor ion species released from the IMS has a temporal pulse width, that may be in the range of a millisecond. The flight-time in the TOF analyzer is shorter than this IMS pulse width such that multiple TOF spectra are measured for each released IMS pulse.

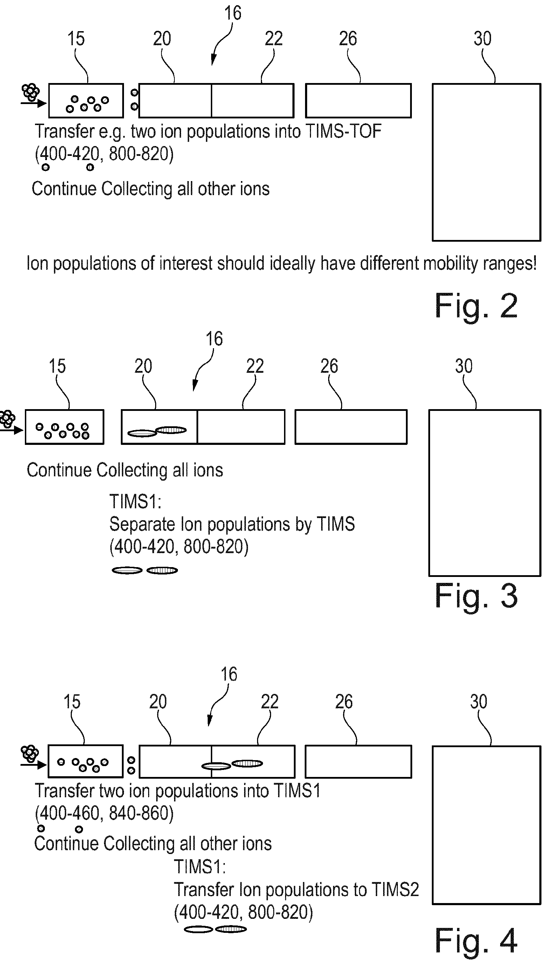

As can be seen from the m/z-mobility diagram of Fig. 2, there is a correlation between the ion mobility and m/z value of the precursors, in that generally, the ion mobility decreases with increasing m/z value, such that the precursors are generally located in regions extending along two diagonal lines in the m/z-mobility diagram, where the two regions visible in Fig. 2 correspond to different charge states (z-values) of the ions.

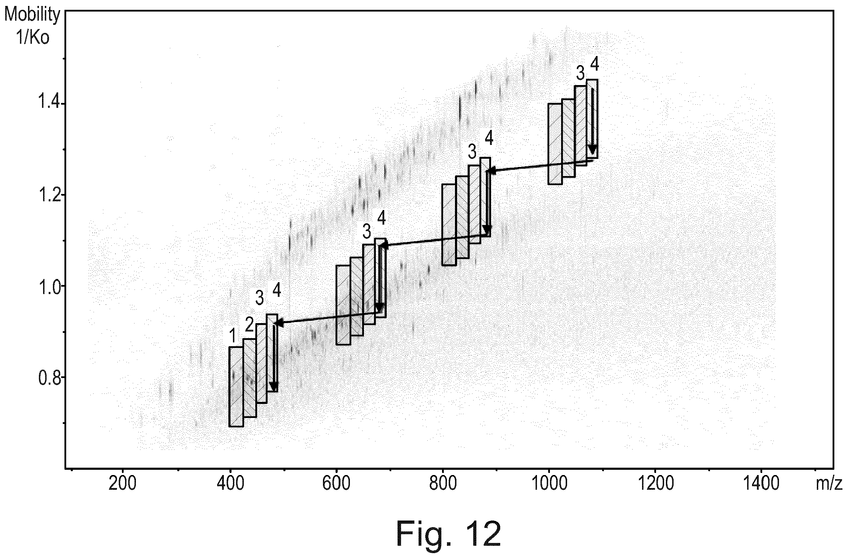

This correlation between mass and mobility of the precursors has been exploited in a data-independent parallel accumulation-serial fragmentation (diaPASEF) method, which is described in Florian Meier et al., diaPASEF: parallel accumulation-serial fragmentation combined with data-independent acquisition, Nat Methods. 2020 Dec;17 (12):1229-1236, doi: 10.1038/s41592-020-00998-0*.* This method shall be explained with reference to Fig. 11 and 12. The method comprises a number of IM scans during which precursor ions are successively released from the IMS device 16 according to their mobility, starting at lower mobilities (larger inverse mobility values on the vertical axis of Fig. 11) and moving towards higher mobilities (i.e. downward in the diagram of Fig. 11). During each IM scan, a number of (typically two or four, as shown in the Figure) different mass windows of the mass filter are successively applied, to thereby cover only relevant portions of the m/z-mobility plane, i.e. regions in which precursors are to be found.

By way of example, the third IM scan out of a sequence of such IM scans is shown in Fig. 11: the scan starts at the highest inverse mobility value, while the mass window of the quadrupole mass filter is kept fixed at a comparatively high value. The width of the mass window is chosen at 25 m/z. All the precursors released from the IMS device and lying in this mass window will pass the quadrupole mass filter and hence be fragmented and subjected to TOF mass spectrometry. The TOF analyzer records mass spectra of the available fragments one after the other, e.g. at a repetition rate of 10 kHz, where each of the mass spectra is associated with a corresponding TOF push. During the course of time, precursors of lower and lower inverse mobility values are released from the IMS device, which is indicated by the rightmost vertically downward pointing arrow in Fig. 11, and - provided that they fit into the fixed mass window of the quadrupole mass filter 26 - are subjected to fragmentation and TOF mass analysis. Accordingly, a different ion mobility range or value is associated with each TOF push of the TOF analyzer.

Once the inverse mobility values drop below a region of interest, i.e. leaves the region where the predominant part of the precursor ions are expected, the mass window may be shifted as indicated by the horizontal arrow pointing from right to left in Fig. 11. Then, the IM scan is continued in a different, shifted mass window. This procedure may e.g. be continued as indicated in Fig. 11 for four different mass windows, each covering an m/z range of 25. Each set of the rectangles acquired during a single IMS separation/IM scan as shown in Fig. 2, where each rectangle covers a 25 m/z mass window and a corresponding IM range, are referred to as a "diaPASEF frame" herein.

Fig. 12 illustrates the following fourth IM scan/diaPASEF frame. The fourth IM scan starts out with a mass window which is directly adjacent to the starting mass window of the third IM scan, and with a slightly higher inverse mobility, such as to cover the relevant portions in the m/z-IM plane. The fourth IM scan is likewise distributed over four disjunct mass windows. This procedure may be continued until the entire range of interest is covered. The results of this procedure are encoded in a four-dimensional data space, comprising the time parameter of the separation device, e.g. a retention time of the liquid chromatography device 12, the m/z mass window, the ion mobility and the intensity. Targeted data extraction can then be carried out in four dimensions as described in the above article of *Meier et al.* The diaPASEF method is "data independent" in that it does not include any preparation or isolation of specific precursors. Instead, all precursors provided by the liquid chromatography device 12 are subjected to the PASEF method, and since the mass windows of the mass filter are chosen to match the current ion mobility range, the degree of utilisation of the available precursor ions is comparatively high. Since this mode of operation of the device comprises two mass selection steps, namely the preselection by the mass window of the quadrupole mass filter 26 as well as the mass spectrometry measurement of the fragment ions generated from the precursor by the TOF analyzer, this procedure is often referred to as MS/MS or MS2 mode of operation in the art.

In the currently best application of the diaPASEF procedure, 16 PASEF frames are used to cover the entire precursor ion space, with a mass window m/z width of 25 and typically 150 - 500 TOF pushes per PASEF frame. For a TIMS accumulation time of 100 ms, the entire cycle time for covering the MS1 frame and all 16 diaPASEF frames is about 1.7 seconds. Since the diaPASEF frames do not overlap in m/z direction, each precursor is scanned only during one diaPASEF frame, resulting in a 5,88% duty cycle for the respective fragment ions.

The duty cycle of roughly 6% is obtained using the clever arrangement of the PASEF frames described above. A higher duty cycle would be welcome for an improved sensitivity, but appears difficult to achieve.

### SUMMARY OF THE INVENTION

A problem underlying the invention is to provide a method and an apparatus for combined ion mobility and mass spectrometry analysis, which allows for an improved sensitivity.

This problem is solved according to one aspect by a method according to claim 1 and an apparatus according to claim 12. This problem is solved according to a further aspect by a method according to claim 11 and an apparatus according to claim 15. Preferable embodiments are defined in the dependent claims.

According to one aspect, this problem is solved by a method of combined ion mobility and mass spectrometry analysis, comprising the following steps:
A) introducing precursor ions into a high-capacity specific ejection (HCSE) trap, said HCSE trap being configured for trapping ions within an m/z range of at least 400, preferably at least 600, and most preferably at least 800 (or even 1200 or more) for a time period of at least 0.3 s, preferably at least 1.5 s, and for selectively ejecting trapped ions according to their m/z ratio,
B) selectively ejecting precursor ions having m/z values falling within at least one controllable ejection window from said HCSE trap during a first time interval and introducing said ejected precursor ions into an ion mobility separator (IMS),
C) sequentially releasing precursor ions from said IMS according to their ion mobility,
D) introducing said released precursor ions into a mass filter which selectively transmits precursor ions having m/z values falling within a controllable mass window,
E) fragmenting the precursor ions transmitted through said mass filter to generate fragment ions,
F) carrying out a mass spectrometry measurement on said fragment ions, wherein each fragment ion is associated with a mass window and an ion mobility (IM) range.

Herein, the term "high-capacity" is descriptive and not meant to impose any additional limitation over the capacity of the trap to confine ions in the mentioned range of m/z values for the time ranges defined above.

Moreover, the control of said at least one ejection window of said HCSE trap in step B) and said mass window of said mass filter applied in step D) are synchronized with each other such that said HCSE trap in step B) ejects precursor ions having an m/z ratio falling into a first ejection window during said first time interval, and said mass window of said mass filter is controlled during a second time interval during step D) such as to completely lie within said first ejection window, or to overlap with said first ejection window by at least 90%. Herein said second time interval is chosen relative to said first time interval such that, accounting for the ion mobility of precursor ions having an m/z ratio falling into said first ejection window, at least 50%, preferably at least 70% and most preferably at least 90% of these precursor ions ejected during said first time interval and falling into said first ejection window, are introduced to said mass separator during said second time interval. Herein, the expression "introduced to said mass separator" does not imply that they are necessarily transmitted by the mass filter, which will only be the case if they also fall into the currently selected mass window of said mass filter.

This way, it is at least approximately ensured that only those precursor ions are selectively ejected from said HCSE trap at a first point in time which have an m/z value that matches the mass window of the mass filter at a second point in time at which the ejected precursor ion is expected to reach the mass filter. This second point in time is at least in part governed by the release time of the precursor ion from the IMS. Precursor ions not meeting this criterion would fail to pass the mass filter and hence not contribute to the measurement, thereby reducing the duty cycle and the measurement sensitivity. However, according to the invention, these precursor ions would at least for the most part remain in the HCSE trap and only be ejected at a later time, for a different setting of the mass window of the mass filter, where the criterion is met.

A duty cycle of 100% would theoretically be obtained if no precursor ions inadvertently escape from the HCSE trap, if the first ejection window during said first time interval in step B) perfectly matches the mass window of said mass filter during said second time interval during step D), and if the second time interval is chosen relative to said first time interval such that, accounting for the ion mobility of precursor ions having an m/z ratio falling into said first ejection window, 100% of these precursor ions ejected during said first time interval and falling into said first ejection window, are introduced to said mass separator during said second time interval. While a duty cycle of 100% can of course not be reached in practice, this is not necessary either, since even for less perfect settings, a dramatic improvement in the duty cycle and hence sensitivity as compared to the diaPASEF method can be obtained. For example, the first ejection window in step B) during the first time interval may be considerably broader than the mass window during the second time interval in step D), and still significantly reduce the fraction of precursor ions that would be lost in the mass filter without the selective ejection from the HCSE trap. However, it is preferred that the mass window during the second time interval in step D) is fully included in said first ejection window, or overlaps therewith by at least 90%.

Similarly, regarding the relative timing of the first and second time intervals, good results can be obtained e.g. if said second time interval is chosen relative to said first time interval such that, accounting for the ion mobility of precursor ions having an m/z ratio falling into said first ejection window, at least 50% of these precursor ions ejected during said first time interval and falling into said first ejection window are introduced to said mass separator during said second time interval. Herein, the expression "accounting for the ion mobility of precursor ions having an m/z ratio falling into said first ejection window" reflects the fact that there is a correlation between the ion mobility and the m/z-values of the precursor ions, as was explained with reference to Fig. 11 and 12 above, leading to a typical distribution of the precursor ions along diagonal regions in the m/z-IM plane. Knowledge about this correlation, which may be obtained from an MS1 measurement, can then be exploited in the relative timing of the first and second time intervals.

In a preferred embodiment, said IMS is one of a trapped IMS (TIMS) device, a drift type IMS device, and a travelling wave IMS device.

Herein, said TIMS device preferably comprises a first TIMS and a second TIMS, wherein said first TIMS is configured for constantly receiving precursor ions and transferring received precursor ions in a time controlled manner to the second TIMS, and said second TIMS is configured for carrying out IM scans in which precursor ions are successively released from said second TIMS (22) according to their ion mobility, and wherein preferably, in each IM scan, precursor ions of lower ion mobility are released prior to precursor ions of higher ion mobility.

In a preferred embodiment, the control of the said at least one ejection window of said HCSE trap and said mass window of said mass filter are further synchronized with each other such that
said HCSE trap ejects ions having an m/z ratio falling into a second ejection window during said first time interval, said second ejection window being non-overlapping with said first ejection window, and said mass window of said mass filter is controlled during a third time interval such as to completely lie within said second ejection window, or to overlap with said second ejection window by at least 90%, wherein said third time interval is chosen relative to said first time interval such that, accounting for the ion mobility of precursor ions having an m/z ratio falling into said second ejection window, at least 50%, preferably at least 70% is 90% of these precursor ions ejected during said first time interval and falling into said second ejection window, are introduced to said mass separator during said third time interval.

That is to say, according to this embodiment, during the same first time interval, in addition to the precursor ions falling into the first ejection window, also precursor ions falling into a second ejection window different from said first ejection window may be ejected. Although ejected during the same first time interval as the precursor ions of the first ejection window, in view of their different m/z values and hence expected different IM values, the ions of the second ejection window will reach the mass filter at least for the most part during a different time range than the ions of the first ejection window, and this time range is referred to as the "third time interval" herein. This way, the throughput of the method can essentially be doubled.

More generally, the throughput can not only be doubled, but increased by a factor of M, where M is an integer number, with M ≥ 2, preferably M ≥ 3, and most preferably M ≥ 4. In such embodiments, the control of the said at least one ejection window of said HCSE trap and said mass window of said mass filter are further synchronized with each other such that said HCSE trap ejects ions having an m/z ratio falling into an n-th ejection window among a number of M ejection windows during said first time interval, wherein n is an integer number M ≥ n ≥ 2. Herein, said n-th ejection window is non-overlapping with said first to (n-1)-th ejection windows, and said mass window of said mass filter is controlled during an (n+1)-th time interval such as to completely lie within said n-th ejection window, or to overlap with said n-th ejection window by at least 90%. In addition, said (n+1)-th time interval is chosen relative to said first time interval such that, accounting for the ion mobility of precursor ions having an m/z ratio falling into said n-th ejection window, at least 50%, preferably at least 70% and most preferably at least 90% of these precursor ions ejected during said first time interval and falling into said n-th ejection window, are introduced to said mass separator during said (n+1)-th time interval.

Said first to M-th ejection windows are preferably separated by an m/z range of at least 100, preferably at least 200, and most preferably at least 300. As the skilled person will appreciate, in the m/z notation used in mass spectrometry, the letter "m" refers to the mass of an ion in unified atomic mass units u and the letter "z" denotes the charge number of the ion. For example, an ion having a mass of 100 u and carrying two charges (z = 2) will have an m/z value of 50. Again, the substantial separation of the m/z values associated with the ejection windows generally leads to a distinction in ion mobility. This way, ions associated with different ejection windows during the same first time interval will be at least in the most part separated in time after passing the IMS and when reaching the mass filter.

In some embodiments, said HCSE trap is configured and controlled such as to simultaneously eject precursor ions falling into two or more of said ejection windows during said first time interval.

In alternative embodiments, said HCSE trap is configured and controlled such as to eject precursor ions falling into two or more of said ejection windows consecutively during said same first time interval, wherein said method further comprises a step of accumulating said consecutively ejected precursor ions prior to simultaneously subjecting the same to ion mobility separation. This essentially has the same effect as establishing various ejection windows simultaneously, but may be easier to achieve with the trap design.

When using the aforementioned TIMS device comprising first and second TIMS, said precursor ions are preferably accumulated in said first TIMS of said TIMS device.

In a preferred embodiment, the method comprises a plurality of cycles in which steps A) to F) are carried out sequentially, wherein for each cycle, said at least one ejection window in step A, the mass window or windows employed in step D) and the relative timing between said first time interval and the second to (M+1)-th time interval(s) are chosen such as to collectively cover, by said plurality of cycles, a region of interest for precursors in the m/z-IM plane, or a target list in a data directed acquisition, including targeted quantification workflows using multiple reaction monitoring (MRM) or parallel reaction monitoring (PRM).

In preferred embodiments, the method further comprises a step of carrying out MS1 mass spectrometry measurements in an operation mode, in which the mass filter and the fragmentation are deactivated, such that all precursor ions sequentially released from the IMS are subjected to mass spectrometry without fragmentation, to thereby obtain m/z spectra as a function of ion mobility of the precursor ions. Herein, it is not strictly necessary that the mass filter is truly "deactivated" in the sense that it transmits any precursor ion it receives. Instead, it is also possible that the mass filter is controlled to provide a (typically comparatively large) mass window covering an m/z range of interest, in which case those precursor ions sequentially released from the IMS and falling within said m/z rate of interest are subjected to mass spectrometry without fragmentation.

The most obvious way of carrying out the MS1 measurement would be to simply deplete the HCSE trap into the IMS device, without any selective ejection. However, this would disrupt the process as a whole, because this would require some time after the depletion until sufficient precursor ions have been introduced into the HCSE trap again such that the MS2 measurement can be continued. In preferred embodiments, MS1 measurements are carried out at frequent intervals in an interleaved manner with the MS2 measurements, and in this case, any delays due to a complete depletion of the HCSE trap would be detrimental.

Accordingly, in one embodiment, during said MS1 measurement, precursor ions are introduced into said IMS along a bypass path bypassing said HCSE trap. This way, the current composition of precursor ions within the HCSE trap is conserved, so that the MS2 measurement can be seamlessly continued after the MS1 measurement. In some embodiments, said bypass path may comprise a buffer storage or trapping region for accumulating precursor ions.

In alternative embodiments, during said MS1 measurement, precursor ions are selectively ejected from said HCSE trap for introducing into said IMS, wherein said selective ejection is carried out in a manner such as to only partially eject at least those portions of said precursor ion population corresponding to the next few scheduled ejection windows. Herein, the selective ejection for the MS1 scan is carried out such that the entire m/z range of interest is covered, but preserving at least some portions of the precursor ion population within the HCSE trap, namely those portions which would be selectively ejected in the next few ejection windows after the MS2 measurement is commenced. On the other hand, it is not equally important to conserve portions of the precursor ion population which are only scheduled for ejection later during the procedure, because those populations can be continuously replenished, so that this portion of the population may have sufficiently recovered by the time it is to be selectively ejected from said HCSE trap.

Other possibilities for generating survey MS1 spectra without losing most ions in the HCSE trap would involve short "barrier drops" in the low millisecond or high submillisecond range or the use of a segmented HCSE trap.

The MS1 spectra can be used for various purposes. For example, the recorded MS1 spectrum can be analyzed such as to identify a target list of precursor ions to be subjected to a data directed acquisition. In addition or alternatively, the MS1 spectrum can be analyzed for determining, based on the relationship between m/z values and corresponding ion mobility ranges established in said MS1 spectrum, boundaries of two or more non-overlapping ejection windows to be used in a same first time interval during step A), such that the IM ranges associated with different ones of said ejection windows do not or at least not significantly overlap, and/or determining the timing of said second to (M+1)-th time intervals.

A further important use of recording and analyzing MS1 spectra is for determining precursor ions present in abundance. Namely, it is seen that precursor ions that are significantly overrepresented in the sample (i.e. "abundant") lead to space charge effects in the IMS device that in turn compromises the IM separation, thereby likewise leading to a reduced sensitivity for low abundance ions and distortion of observed ion mobilities. However, when identifying abundant precursor ions in the MS1 spectrum, it is possible to selectively eject abundant precursor ions identified in the MS1 measurement prior to step B), thereby increasing the sensitivity of the measurement. This is particularly useful in combined ion mobility and mass spectrometric proteomic analysis of blood plasma or some tissues, such as muscle or skin, where abundant species are often found and tend to compromise the sensitivity of the measurement, at least with respect to those precursor ions that have a similar ion mobility as the abundant species. Another example are highly abundant matrix ions in MALDI-based analyses, such as MALDI imaging.

In some embodiments, the method is a method of data independent combined ion mobility and mass spectrometry analysis, said method comprising a step of associating detected fragments with its corresponding precursor ion.

Herein, said step of associating detected fragments with its corresponding precursor ion may be based at least in part on determining or utilizing the corresponding mass window and IM ranges associated with various occurrences of said fragment in said mass spectrometry measurement, wherein the occurrence of said fragment corresponds to a relative or absolute intensity of the fragment in the mass spectrometry measurement.

However, the method of the invention is also very useful for data-directed acquisition and also targeted quantification workflows, where the high sensitivity can be exploited particularly well.

In preferred embodiments, said mass filter is a quadrupole RF device. Moreover, the mass spectrometric analysis is preferably carried out using a TOF mass analyzer.

In a preferred embodiment, the method further comprises a step of providing said precursor ions by separating precursor molecules from a sample and ionizing said precursor molecules. The separation of precursor molecules from said sample is preferably carried out by chromatography, and most preferably by liquid chromatography. Alternatively, samples can be analyzed by MALDI-based analysis with spatial resolution, e.g. using MALDI imaging of tissue slices.

The sample preferably comprises biological material, in particular one of peptides, lipids, metabolites or other small molecules in the mass range between 50 and 5000 Da. However, the sample may also include synthetic compounds, including drugs and their metabolites.

In a particularly preferred embodiment, the precursor ions are derived from a sample formed by a single cell. Due to the extremely high duty cycle/sensitivity, the method of the present invention indeed allows for high precision measurements on single cell samples, an approach that is also referred to as "single cell proteomics", with so far no satisfying measurement techniques available. Due to the high duty cycles/sensitivity, the method of the invention is ideally suited for single cell proteomics applications.

In particularly preferred embodiments, as mentioned above, said precursor ions are derived from a blood plasma or serum sample. Especially when using the possibility to remove abundant precursor ions typically found in measurements of blood plasma or serum samples, measurements with very high sensitivity and dynamic range can be carried out which can hardly be achieved with other methods.

Indeed, the possibility to selectively remove abundant precursor ions in blood plasma or other samples is an independent solution of the problem of increasing the sensitivity of the combined ion mobility and mass spectrometry analysis, even if the HCSE trap is solely used for this purpose.

According to another aspect, the problem solved by a method of combined ion mobility and mass spectrometry analysis, comprising cycles of the following steps:
O) introducing precursor ions into high-capacity specific ejection (HCSE) trap, said HCSE trap being configured for trapping ions within an m/z range of at least 400, preferably at least 600, and most preferably at least 800 (or even 1200 or more) for a time period of at least 0.3 s, preferably at least 1.5 s, and for selectively ejecting trapped ions according to their m/z ratio,
P) introducing precursor ions from said HCFC trap into an ion mobility separator (IMS),
Q) sequentially releasing precursor ions from said IMS according to their ion mobility,
R) introducing said released precursor ions into a mass filter which selectively transmits precursor ions having m/z values falling within a controllable mass window,
S) fragmenting the precursor ions transmitted through said mass filter to generate fragment ions, and
T) carrying out a mass spectrometry measurement on said fragment ions, wherein each fragment ion is associated with a mass window and an ion mobility (IM) range,
wherein said method further comprises
a step of carrying out MS1 mass spectrometry measurements in an operation mode, in which the mass filter is deactivated or controlled to provide a mass window covering an m/z range of interest and the fragmentation is deactivated, such that all precursor ions sequentially released from the IMS or at least those falling within said m/z range of interest are subjected to mass spectrometry without fragmentation, to thereby obtain m/z spectra as a function of ion mobility of the precursor ions,
a step of analyzing the MS1 spectrum to determine abundant ions among said precursor ions, and
a step of selectively ejecting abundant precursor ions identified in the MS1 measurement prior to step P).

A further aspect of the invention relates to an apparatus for combined ion mobility and mass spectrometry analysis, said apparatus comprising:
a high-capacity specific ejection (HCSE) trap, said HCSE trap being configured for trapping ions within an m/z range of at least 400, preferably at least 600, and most preferably at least 800 (or even 1200 or more) for a time period of at least 0.3 s, preferably at least 1.5 s, and for selectively ejecting trapped ions according to their m/z ratio,
an ion mobility separator (IMS) for receiving and sequentially releasing precursor ions from said IMS according to their ion mobility,
a mass filter arranged to receive said released precursor ions and to selectively transmit precursor ions having m/z values falling within a controllable mass window,
a fragmentation device for fragmenting the precursor ions transmitted through said mass filter to generate fragment ions,
an apparatus for carrying out a mass spectrometry measurement on said fragment ions, wherein each fragment ion is associated with a mass window and an ion mobility (IM) range, and
a control system,
wherein said control system is configured to control said HCSE trap, said IMS and said mass filter in a synchronized manner such as to carry out a method comprising the following steps:
A) introducing precursor ions into said high-capacity specific ejection (HCSE) trap,
B) selectively ejecting precursor ions having m/z values falling within at least one controllable ejection window from said HCSE trap during a first time interval and introducing said ejected precursor ions into an ion mobility separator (IMS),
C) sequentially releasing precursor ions from said IMS according to their ion mobility,
D) introducing said released precursor ions into a mass filter which selectively transmits precursor ions having m/z values falling within a controllable mass window,
E) fragmenting the precursor ions transmitted through said mass filter to generate fragment ions, and
F) carrying out a mass spectrometry measurement on said fragment ions, wherein each fragment ion is associated with a mass window and an ion mobility (IM) range.

The control system is further configured for controlling said at least one ejection window of said HCSE trap in step B) and said mass window of said mass filter applied in step D) in a synchronized manner such that said HCSE trap in step B) is caused to eject precursor ions having an m/z ratio falling into a first ejection window during said first time interval, and said mass window of said mass filter is controlled during a second time interval during step D) such as to completely lie within said first ejection window, or to overlap with said first ejection window by at least 90%,
wherein said second time interval is controlled relative to said first time interval such that, accounting for the ion mobility of precursor ions having an m/z ratio falling into said first ejection window, at least 50%, preferably at least 70% and most preferably at least 90% of these precursor ions ejected during said first time interval and falling into said first ejection window, are introduced to said mass separator during said second time interval.

In a preferred embodiment, said IMS is one of a trapped IMS (TIMS) device, a drift type IMS device, and a travelling wave IMS device.

Preferably, said TIMS device comprises a first TIMS and a second TIMS, wherein said first TIMS is configured for constantly receiving precursor ions and transferring received precursor ions in a time controlled manner to the second TIMS, and said second TIMS is configured for carrying out said IM scans in which precursor ions are successively released from said second TIMS according to their ion mobility, and wherein preferably, in each IM scan, precursor ions of lower ion mobility are released prior to precursor ions of higher ion mobility.

In another preferred embodiment, said drift type IMS device or travelling wave device comprises a trapping region and a separation region, wherein said trapping region is configured for constantly receiving precursor ions and transferring received precursor ions in a time controlled manner to the separation region, and said separation region is configured for carrying out said IM scans in which precursor ions are separated in the separation region of the drift type IMS device or travelling wave device according to their ion mobility, and wherein preferably, in each IM scan, precursor ions of higher ion mobility are released prior to precursor ions of lower ion mobility. The skilled person will appreciate that irrespectively of whether the IMS device releases precursor ions with lower ion mobility first (as in the above mentioned TIMS device) or releases precursor ions with higher ion mobility first (as in the drift type IMS device or travelling wave device), the control of the at least one ejection window of the HCSEtrap and the mass window of the mass filter can be synchronized appropriately with each other in the manner described above to account for the ion mobility.

In a preferred embodiment, said mass filter is a quadrupole RF device. In a preferred embodiment said apparatus for carrying out a mass spectrometry measurement on said fragment ions is a TOF mass analyzer.

The apparatus may further comprise an ion source.

In a preferred embodiment, the apparatus further comprises a bypass path bypassing said HCSE trap, wherein said bypass path preferably comprises a buffer storage or trapping region for accumulating precursor ions.

In preferred embodiments, said control system is configured to control said HCSE trap, said IMS and said mass filter in a synchronized manner such as to carry out a method according to one of the embodiments set forth above.

### SHORT DESCRIPTION OF THE FIGURES

- Fig. 1: is a schematic illustration of a system according to an embodiment of the invention.
- Fig.2-10: show schematic diagrams of the apparatus showing consecutive stages of the method.
- Fig. 11: shows the distribution of precursor ions in the m/z-IM plane, together with the location of PASEF frames and arrows indicating the procedure of the third IM scan in the diaPASEF method.
- Fig. 12: shows the same distribution of precursor ions and the PASEF frames in the m/z - IM plane as in Fig. 2, but arrows indicating the procedure of the fourth IM scan in the diaPASEF method.

### DESCRIPTION OF THE PREFERRED EMBODIMENT

It is to be understood that both the foregoing general description and the following description are exemplary and explanatory only and are not restrictive of the methods and devices described herein. In this application, the use of the singular may include the plural unless specifically state otherwise. Also, the use of "or" means "and/or" where applicable or unless stated otherwise. Those of ordinary skill in the art will realize that the following description is illustrative only and is not intended to be in any way limiting. Other embodiments will readily suggest themselves to such skilled persons having the benefit of this disclosure. Reference will now be made in detail to various implementations of the example embodiments as illustrated in the accompanying drawings.

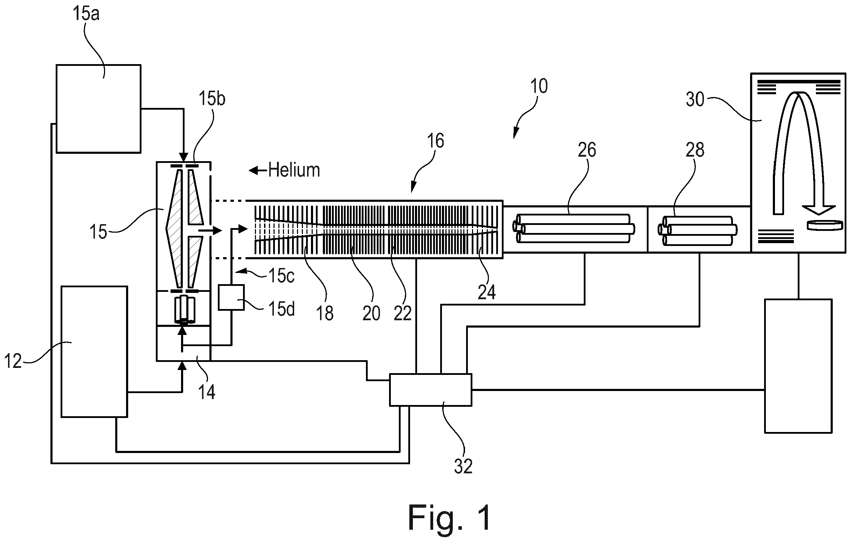

In Fig. 1, a system 10 for combined ion mobility and mass spectrometry analysis shown. The system 10 comprises a sample separation device 12 for separating samples. The samples are typically biological samples, for example peptides, lipids or metabolites. In the embodiment shown, the sample separation device 12 is a liquid chromatography device, but other separation devices may likewise be used, for example a gas chromatography device, a capillary electrophoresis separation device, or the like. Alternatively, analytes may be introduced into the system by means of a MALDI- ionization source, potentially preserving spatial resolution of e.g. a histological specimen.

The separated samples, or more precisely substances of a sample, are introduced to an ion source 14 in which they are ionized, e.g. by electrospray ionization (ESI), matrix-assisted laser desorption/ionization (MALDI), or electron impact ionization (EI), to form precursor ions.

Further shown in the system 10 is a high-capacity specific ejection (HCSE) trap 15, into which the precursor ions formed by the ion source 14 are introduced. The HCSE trap 15 is configured for trapping ions within an m/z range having a width of at least 400, but in preferred embodiments, it is capable of trapping ions in a larger m/z range, such as a range covering at least 600 or preferably at least 800 or even 1200 or more. In the shown embodiment, the HCSE trap is capable of storing precursor ions within an m/z range between 350 to 1400, for a time range of at least 1.5 s. In operation of the apparatus 10, precursor ions generated by the ion source 14 are continuously introduced into the HCSE trap 15.

Moreover, the HCSE trap is configured for selectively ejecting precursor ions having m/z values falling within at least one controllable ejection window. In preferred embodiments, however, the HCSE trap 15 is configured for simultaneously selectively ejecting precursor ions from at least two non-overlapping ejection windows. In the embodiment shown, the HCSE trap 15 is of the so-called Q-TAP design, which is a high-capacity ion trap design having a tapered geometry, allowing trapping of 10⁶ to 10⁷ ions. More details about the design of such Q-TAPs is found e.g. in Myung et al., High-Capacity Ion Trap Coupled to a Time-of-Flight Mass Spectrometer for Comprehensive Linked Scans with no Scanning Losses, Int J. Mass Spectrom, 2011 Mar 30;301(1-3):211-219. doi: 10.1016/j.ijms.2010.09.013*.* However, other ion trap designs are likewise possible, such as multiple based ion traps (e.g. quadrupole, hexapole or octopole) with or without segmentation, or arrays of ion traps.

The Q-TAP 15 in the shown embodiment comprises so-called Vane lenses 15b as described e.g. in US7592589B2. while these Vane lenses are only optional, they are highly advantageous, as they allow for an increased efficiency.

The Q-TAP 15 is controlled by a dedicated ion trap controller 15a which controls the trapping and ejection. In the embodiment shown, the trap controller 15a uses SWIFT (Stored Waveform Inverse Fourier Transform)-based waveform generators for controlling trapping and ejection efficiencies. The use of such SWIFT waveform generators is explained in more detail in Guan et al., Stored waveform inverse Fourier transform (SWIFT) ion excitation in trapped-ion mass spectrometry: theory and applications. International Journal of Mass Spectrometry and Ion Processes. 1996;157/158:5-37 and need not be repeated here.

For a mass selective ejection for the gas phase depletion of abundant ions referred to in the summary of the invention, suitable waveforms can be determined using the Mathieu-parameter applying the Dehmelt-approximation. Using the optional Vane lenses 15b and corresponding DC voltages, the efficiency of mass-selective axial ejection can be improved, as explained in Hashimoto Y et al., Mass selective ejection by axial resonant excitation from a linear ion trap, Am Soc Mass Spectrom. 2006 May; 17(5):685-90. doi: 10.1016/j.jasms.2006.01.011*. Epub 2006 Mar 9.PMID: 16529941*, and US7592589B2.

The precursor ions selectively ejected from said HCSE trap 15 are introduced into an ion mobility separator 16 which sequentially releases precursor ions according to their ion mobility. While not shown in Fig. 1, an electrode may be arranged directly downstream of the HCSE trap 15 for selectively capturing abundant ions that are not to be transeferred to the ion mobility separator 16 upon selective ejection from the HCSE trap 15. In the embodiment shown, the IMS 16 is a so-called trapped IMS (TIMS) device, in which ions are preferably captured by the opposing forces of a gas flow and a counteracting DC electric field along an axial direction. The ions are radially confined by electric RF fields. The TIMS device 16 shown comprises an entrance funnel 18, a first TIMS 20, a second TIMS 22, and an exit funnel 24. Herein, the first TIMS 20 is configured for constantly receiving precursor ions and transferring received precursor ions in a time controlled manner to the second TIMS 22. The second TIMS (22) is configured for carrying out IM scans in which precursor ions are successively released from the second TIMS 22 according to their ion mobility. In the embodiment shown, in each IM scan, precursor ions of lower ion mobility are released prior to precursor ions of higher ion mobility. In other embodiments, the IMS may be a traveling wave IMS device (TWIMS) or a drift tube IMS (DT-IMS). These IMS would release precursor ions of higher ion mobility prior to precursor ions of lower ion mobility due to a different separation principle.

Further schematically shown in Fig. 1 is a bypass path 15c which allows for introducing precursor ions generated by the ion source 14 into the IMS 16 without passing the HSCE trap 15. As will be explained in more detail below, this bypass path 15b is particularly useful for recording MS1 spectra while preserving the current ion population within the HCSE trap 15. In the bypass path 15c, a further optional storage 15d is provided.

Downstream of the IMS 16, a mass filter 26 is provided. The mass filter 26 selectively transmits precursor ions having m/z values falling within a controllable mass window. In the shown embodiment, the mass filter is a quadrupole RF device 26.

Precursor ions falling into the current mass window of the quadrupole RF device 26 are forwarded to a fragmentation apparatus 28 in which the precursor ions are fragmented into fragment ions. In the shown embodiment, the fragmentation apparatus is a collision cell 28. However, other types of fragmentation apparatus are likewise possible, such as surface induced dissociation fragmentation devices, electron transfer dissociation (ETD) devices, electron capture dissociation (ECD) devices, ultraviolet photo-induced dissociation (UVPD) or the like.

The system 10 further comprises a mass spectrometer 30, which carries out a mass spectrometry measurement on the fragment ions. In the shown embodiment, the mass spectrometer is a time-of-flight (TOF) analyzer.

Finally, the system 10 comprises a control system 32 which is configured to control each of the components of the system 10 and to also carry out the data analysis of the mass spectra obtained by the TOF analyzer 30. The control system 32 comprises one or more microprocessors as well as a memory for storing suitable computer code for carrying out system control and data analysis functions. The control system 32 may be a single unit, or may be a distributed system comprising different control units with individual processors and and/or dedicated control circuits, ASICs or the like in data communication with each other.

The system 10 shown in Fig. 1 can operate in two modes of operation, which are often referred to as the MS1 and MS2 (tandem MS or MS/MS) mode, respectively. If operated in the MS1 mode, the mass filter 26 and the collision cell 28 are deactivated, such that all precursor ions sequentially released from the second TIMS 22 are conveyed to the TOF analyzer 30 without mass selection or fragmentation, to thereby obtain high resolution m/z spectra as a function of ion mobility of the precursors. The precursors are further associated with a corresponding retention time of the chromatography device 12. An m/z-mobility diagram of observed/measured precursor ion intensities obtained in the MS1 mode is shown in Fig. 11. In the diagram of Fig. 11, the horizontal axis defines the m/z value of the precursor while the vertical axis defines the inverse ion mobility (1/Kₒ), such that larger values on the vertical axis correspond to lower mobilities. In the diagram of Fig. 11, individual precursors are represented by vertically elongated spots, i.e. with a certain spread in mobility direction, since ions accumulate in the TIMS device 16 with a certain spatial distribution resulting in the mobility measured with the TIMS device 16 for the same precursor exhibiting a certain variance. Namely, a precursor ion species released from the TIMS device 16 has a temporal pulse width, that may be in the range of a millisecond. The flight-time in the TOF analyzer is shorter than this TIMS pulse width such that multiple TOF spectra are measured for each released TIMS pulse.

Next, with reference to Fig. 2 to 11, a method of combined ion mobility and mass spectrometry analysis using the apparatus 10 of Fig. 1 is described. Fig. 2 is a simplified representation of the apparatus 10 of Fig. 1 in which only those components necessary for explaining the method are shown, namely the HCSE trap 15, the first and second TIMS 20, 22, the quadruple mass filter 26 and the TOF analyzer 30 (but with e.g. the collision cell 28, the liquid chromatography device 12, the bypass 15c and the control system 32 being omitted for clarity).

As is demonstrated in Fig. 2, in preferred embodiments of the method, precursor ions are continuously introduced into the HCSE trap 15. Fig. 2 shows the system 10 during a first time interval of a first cycle, in which precursor ions having m/z values falling into a first ejection window covering m/z values of 800 - 820 and precursor ions falling into a second ejection window covering m/z values from 400 - 420 are selectively ejected from the HCSE trap 15 and introduced into the first TIMS 20 of the TIMS device 16. The first TIMS 20 continuously receives ions selectively ejected from the HCSE trap 15 falling into one of the first and second ejection windows (m/z values of 800 - 820 or 400 - 420) and accumulates them therein. In this regard, it is not important whether the first and second ejection windows are applied truly simultaneously or sequentially during said first time interval, since in both cases, precursor ions from both ejection windows will accumulate in the first TIMS 20.

Fig. 3 shows a state of the system after the end of the first time interval, where ejection from the HCSE trap 15 is stopped and the previously ejected two ion populations associated with the first and second ejection windows are accumulated in the first TIMS 20. Fig. 2 and 3 hence illustrate step B) of a first cycle of the method as summarized above.

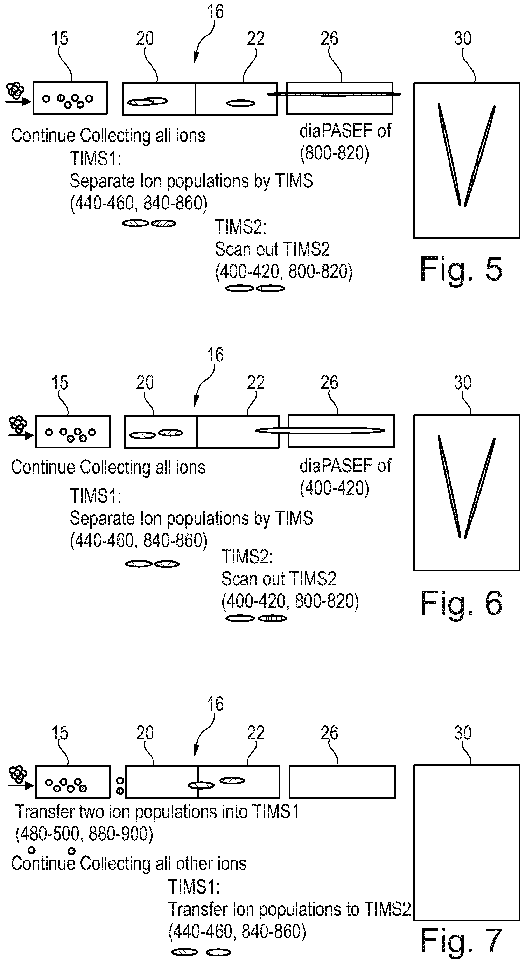

In Fig. 4, the two selectively ejected ion populations of the first cycle are transferred from the first TIMS 20 to the second TIMS 22, and the ion mobility separation proper begins. In this ion mobility separation, precursor ions are sequentially released from the TIMS 16 according to their ion mobility. In the TIMS device 16 shown, precursor ions of lower ion mobility are released prior to precursor ions of higher ion mobility. With reference again to Fig. 11, it is seen that precursor ions having a higher m/z value typically have a lower ion mobility, bearing in mind that the vertical axis in Fig. 11 defines the inverse ion mobility (1/Kₒ), such that larger values on the vertical axis actually correspond to lower mobilities. Accordingly, precursor ions from the first ejection window (800 - 820 m/z) will pass the second TIMS 22 faster than those of the second ejection window (400 - 420 m/z ), as can be seen in Fig. 4 and Fig. 5.

Once the first and second ion populations of the first cycle have been transferred from the first TIMS 20 to the second TIMS 22, a second cycle can be started, as is likewise seen in Fig. 4. The situation shown in Fig. 4 and 5 hence corresponds to step C) of the first cycle, but at the same time to step B) of the second cycle. Namely, while the ion mobility separation of the first cycle is underway, during a first time interval of the second cycle, again precursor ions falling within a first and a second ejection window of the HCSE trap 15 are selectively ejected and transferred to the first TIMS 20 of the TIMS device 16. During this second cycle, the first and second ejection windows have been shifted as compared to the first cycle, to cover m/z ranges of 840 - 860 and 440 - 460, respectively.

Fig. 5 shows the situation during a second time interval of the first cycle in which precursor ions of the first population (800 - 820 m/z) are released from the second TIMS 22 and introduced to the mass separator 26, followed by fragmentation (not shown) and mass spectrometry measurement in the TOF analyzer 30. During this second time interval, the mass window of the mass filter 26 is controlled such as to precisely match the first ejection window of the first cycle, i.e. 800 - 820 m/z. This mass window is narrow enough for an efficient data independent or data-directed analysis. However, a narrow mass window at the mass filter 26 normally comes along with a low duty cycle/sensitivity, because usually a narrow mass filter means that many precursor ions not matching the mass window will be lost. However, in the embodiment shown, due to the selective ejection during the first time interval and the synchronization of the selective ejection and the control of the mass window of the mass filter 26, it is seen that only those precursor ions reach the mass filter 26 during the second time interval, which actually do fit through its mass window, so that no precursor ions are lost.

The embodiment shown is in a sense an ideal case where the ejection window during the first time interval and the mass window during the second time interval precisely match. However, this is of course not necessary, since a considerable increase in sensitivity can still be obtained even if the mass window during the second time interval is considerably smaller than the corresponding ejection window during the first time interval of the same cycle. Indeed, depending on the application, the mass window at the mass filter 26 can be very narrow, covering e.g. a range having a width as low as 2 m/z only, and particularly in these cases, the first ejection window would be significantly wider than this. However, the mass window should completely lie within the corresponding ejection window, or at least overlap with it by e. g. 90% or more.

Fig. 6 shows the apparatus at a later stage, corresponding to the third time interval of the first cycle, during which the second ion population associated with the second ejection window (400 - 420 m/z) of the first cycle is being released from the TIMS device 16 and introduced to the mass filter 26. During this third time interval, all precursor ions of the first population have already passed the mass filter 26 and been subjected to the TOF measurement (see Fig. 5). During this third time interval, the mass window of the mass filter 26 is selected such as to coincide with the second ejection window of the first cycle. Accordingly, although a fairly narrow mass window is chosen at the mass filter 26 during both, the second and third time intervals, no precursor ions are lost.

The skilled person will appreciate that the method of the embodiment relies on an appropriate timing for changing the setting of the mass window at the mass filter 26 between the second and third time intervals. In the example shown, due to their markedly different ion mobilities, the first and second ion populations are completely separate upon release from the TIMS device 16. This can be achieved by using a fairly large separation between the first and second ejection windows of the same cycle, which separation in the present case is 380 m/z.

With this separation of the ion mobility ranges associated with the first and second populations, the second and third time intervals (which obviously cannot overlap since they require different mass windows at the mass filter 26) can be chosen with respect to the first time interval such that accounting for the respective ion mobilities of the populations, all of the precursor ions ejected during the first time interval and falling into the first (second) ejection window will be introduced into the mass separator 26 during the second (third) time interval.

Again, such perfect separation of the first and second populations will not always be possible, and is also not necessary even for obtaining dramatic improvements in sensitivity as compared to the state of the art diaPASEF method. For example, it may be sufficient if at least 70% of the precursor ions ejected during the first time interval and falling into the first (second) ejection window are introduced to the mass separator 26 during the second (third) time interval. Please note that the process illustrated in Fig. 5 and 6 corresponds to steps D), E) and F) with respect to the first cycle of the method.

This process is then repeated for as many consecutive cycles as needed for different settings of the first and second ejection windows in order to collectively cover a region of interest for precursor ions in the m/z-IM plane or a target list in a data directed acquisition. For example, Fig. 7 shows a situation, in which the IM separation of the first and second populations of the second cycle is underway (step C) of the second cycle), while step B) of the third cycle has already commenced. Namely, the situation shown in Fig. 7 corresponds to the first time interval of the third cycle, in which precursor ions falling into first and second mass windows of the third cycle (corresponding to 880 - 900 m/z and 480 - 500 m/z, respectively) are selectively ejected and introduced into the first TIMS 20 of the TIMS device 16.

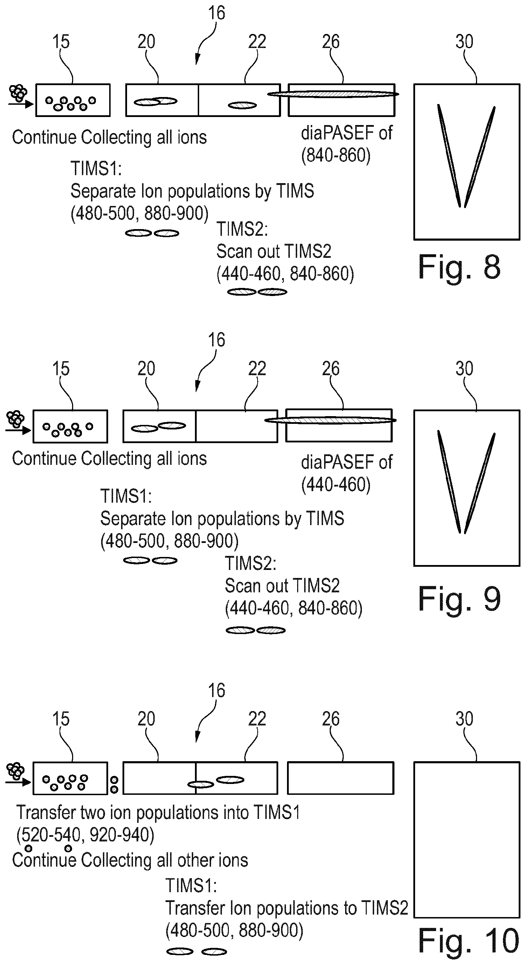

Fig. 8 shows a situation corresponding to the second time interval of the second cycle, where the first ion population of the second cycle (having m/z values in a range of 840 - 860) are released from the second TIMS 22 and introduced into the mass filter 26, which is controlled to precisely match this ejection window. Also shown in Fig. 8 is a part of the first ion population of the second cycle which is already subjected to the TOF measurement.

Fig. 9 shows a situation corresponding to the third time interval of the second cycle, in which the ions of the second ion population of the second cycle (with m/z values in the range of 440 - 460) pass through the mass filter 26 which has its mass window controlled to precisely this range, and are subjected to the TOF measurement.

Finally, Fig. 10 shows a situation, where the second cycle is completed, and in which the first and second ion population of the third cycle are subjected to ion mobility separation in the second TIMS 22, and in which step B) of the fourth cycle has started, in which during the first time interval of the fourth cycle, precursor ions falling within first and second ejection windows (920 - 940, 520 to 540) of the fourth cycle are selectively ejected.

As can be seen from the above description, using the method described above, MS2 measurements with unprecedented sensitivity can be carried out. While prior art diaPASEF in the exemplary procedure described with reference to Fig. 11 and 12 only allowed for duty cycles of up to approximately 6%, the described method theoretically allows for a duty cycle of 100%, and in practice duty cycles of e. g. 80% or beyond. With such large duty cycles and corresponding sensitivity, the "trapped PASEF" method becomes a promising candidate for single cell proteomics, which would not be possible using the prior art PASEF approach.

In preferred embodiments, after a certain number of MS2 cycles, it is advantageous to create and analyze an MS1 spectrum. The analysis of the MS1 spectrum may be useful for a number of reasons. One reason would be to identify a target list of precursor ions to be subjected to a data directed acquisition.

A further use of the MS1 spectrum would be to determine, based on the relationship between m/z values and corresponding ion mobility ranges established in the MS1 spectrum, suitable boundaries of the first and second ejection windows used in the various cycles, and alternatively or in addition, suitable timings for the second and third time intervals, to thereby ensure that the ion populations from different ejection windows employed during the same first time interval do not overlap at the mass filter, and that the second and third time intervals do indeed cover the expected arrival times of the first and second ion populations, so that no or only little ions are lost. This becomes even more important if instead of employing two distinct ejection windows during the first time interval of any given cycle, a larger number of ejection windows is used, such as three, four or even more. In this case, it becomes critically important that the boundaries of the ejection windows and the timing of the second, third and higher time intervals are suitably chosen with respect to the m/z values and mobilities of the precursor ions derived from the sample. For this, it is necessary to regularly determine MS1 spectrum from time to time.

A further important use of the MS1 spectrum is to identify abundant precursor ions, which would lead to space charge effects in the TIMS device 16 and hence compromise the IM separation. If such abundant precursor ions are identified in the MS1 spectrum, they can be selectively discharged from the HSCSE trap 15 before the MS2 measurement for the remaining precursor ions is carried out. This proves particularly useful if blood plasma or serum samples are analyzed, where highly abundant ions are typically found.

As was explained in the summary of the invention, the straightforward way of obtaining MS1 spectra would involve simply depleting the entire HCSE trap 15 for the MS1 measurement. However, after the HCSE trap 15 is fully depleted, it has to be refilled for some time before the MS2 measurement can be resumed. This would, however, introduce a significant delay in the procedure, which would make the frequent recordal of MS1 spectra very costly in terms of processing time.

This problem can be avoided if during the MS1 measurement, precursor ions are selectively ejected from the HCSE trap 15 for introducing into the TIMS 16 in such a manner that at least those portions of the precursor ion population corresponding to the next few scheduled ejection windows, e.g. the ejection windows that will be used in the first few cycles when the MS2 measurement is commenced again, are only partially ejected. Actually, these populations should be fairly strong, since the cycles in which these populations have last been ejected have long passed, so that there has been sufficient time to replenish these populations.

In the embodiment shown in Fig. 1, however, a bypass 15c is provided which allows for introducing precursor ions into the TIMS 16 without passing through the HCSE trap 15 first, allowing for carrying out MS1 measurements without affecting the ion populations within the HCSE trap 15. This way, MS1 measurements can be easily interspersed between MS2 cycles without changing the ion populations in the HCSE trap 15 and hence without disrupting the MS2 measurement when it is resumed.

While the present invention has been described in terms of specific embodiments, it is understood that variations and modifications will occur to those in the art, all of which are intended as aspects of the present invention. Accordingly, only such limitations as appear in the claims should be placed on the invention.

## Claims

1. A method of combined ion mobility and mass spectrometry analysis, comprising the following steps:
A) introducing precursor ions into a high-capacity specific ejection (HCSE) trap (15), said HCSE trap being configured for trapping ions within an m/z range of at least 400, preferably at least 600, and most preferably at least 800 for a time period of at least 0.3 s, preferably at least 1.5 s, and for selectively ejecting trapped ions according to their m/z ratio,
B) selectively ejecting precursor ions having m/z values falling within at least one controllable ejection window from said HCSE trap (15) during a first time interval and introducing said ejected precursor ions into an ion mobility separator (IMS) (16),
C) sequentially releasing precursor ions from said IMS (16) according to their ion mobility,
D) introducing said released precursor ions into a mass filter (26) which selectively transmits precursor ions having m/z values falling within a controllable mass window,
E) fragmenting the precursor ions transmitted through said mass filter (26) to generate fragment ions,
F) carrying out a mass spectrometry measurement on said fragment ions, wherein each fragment ion is associated with a mass window and an ion mobility (IM) range,
wherein the control of said at least one ejection window of said HCSE trap in step B) and said mass window of said mass filter applied in step D) are synchronized with each other such that
said HCSE trap (15) in step B) ejects precursor ions having an m/z ratio falling into a first ejection window during said first time interval, and said mass window of said mass filter is controlled during a second time interval during step D) such as to completely lie within said first ejection window, or to overlap with said first ejection window by at least 90%,
wherein said second time interval is chosen relative to said first time interval such that, accounting for the ion mobility of precursor ions having an m/z ratio falling into said first ejection window, at least 50%, preferably at least 70% and most preferably at least 90% of these precursor ions ejected during said first time interval and falling into said first ejection window, are introduced to said mass separator during said second time interval.

2. The method of claim 1, wherein said IMS (16) is one of a trapped IMS (TIMS) device, a drift type IMS device, and a travelling wave IMS device,
wherein said TIMS device (16) preferably comprises a first TIMS (20) and a second TIMS (22), wherein said first TIMS (20) is configured for constantly receiving precursor ions and transferring received precursor ions in a time controlled manner to the second TIMS (22), and said second TIMS (22) is configured for carrying out IM scans in which precursor ions are successively released from said second TIMS (22) according to their ion mobility, and wherein preferably, in each IM scan, precursor ions of lower ion mobility are released prior to precursor ions of higher ion mobility.

3. The method of one of the preceding claims, wherein the control of the said at least one ejection window of said HCSE trap (15) and said mass window of said mass filter are further synchronized with each other such that
said HCSE trap (15) ejects ions having an m/z ratio falling into an n-th ejection window among a number of M ejection windows during said first time interval in step B), wherein n is an integer number M ≥ n ≥ 2, and wherein M ≥ 2, preferably M ≥ 3, and most preferably M ≥ 4,
said n-th ejection window being non-overlapping with said first to (n-1)-th ejection window(s), and such that said mass window of said mass filter is controlled during an (n+1)-th time interval such as to completely lie within said n-th ejection window, or to overlap with said n-th ejection window by at least 90%,
wherein said (n+1)-th time interval is chosen relative to said first time interval such that, accounting for the ion mobility of precursor ions having an m/z ratio falling into said n-th ejection window, at least 50%, preferably at least 70% and most preferably at least 90% of these precursor ions ejected during said first time interval and falling into said n-th ejection window are introduced to said mass separator during said (n+1)-th time interval.

4. The method of claim 3, wherein said first to M-th ejection windows are separated by an m/z range of at least 100, preferably at least 200, and most preferably at least 300, and/or
wherein said HCSE trap (15) is configured and controlled such as to simultaneously eject precursor ions falling into two or more of said ejection windows during said first time interval.

5. The method of claim3 or 4, wherein said HCSE trap (15) is configured and controlled such as to eject precursor ions falling into two or more of said ejection windows consecutively during said same first time interval, wherein said method further comprises a step of accumulating said consecutively ejected precursor ions prior to simultaneously subjecting the same to ion mobility separation,
wherein said precursor ions are preferably accumulated in said first TIMS (20) of said TIMS (16) device.

6. The method of one of the preceding claims, said method comprising a plurality of cycles in which steps A) to F) are carried out sequentially, wherein for each cycle, said at least one ejection window in step A), the mass window or windows employed in step D) and the relative timing between said first time interval and the second to (M+1)-th time interval(s) are chosen such as to collectively cover, by said plurality of cycles, a region of interest for precursors in the m/z-IM plane, or a target list in a data-directed acquisition.

7. The method of one of the preceding claims, further comprising a step of carrying out MS1 mass spectrometry measurements in an operation mode, in which the mass filter (26) is deactivated or controlled to provide a mass window covering an m/z range of interest and the fragmentation is deactivated, such that all precursor ions sequentially released from the IMS (16), or at least those falling within said m/z range of interest, are subjected to mass spectrometry without fragmentation, to thereby obtain m/z spectra as a function of ion mobility of the precursor ions,
wherein during said MS1 measurement, precursor ions are preferably introduced into said IMS along a bypass path (15c) bypassing said HCSE trap (15), wherein said bypass path (15c) preferably comprises a buffer storage (15d) or trapping region for accumulating precursor ions, or
wherein during said MS1 measurement, precursor ions are preferably selectively ejected from said HCSE trap (15) for introducing into said IMS (16), wherein said selective ejection is carried out in a manner such as to only partially eject at least those portions of said precursor ion population corresponding to the next few scheduled ejection windows.

8. The method of claim 7, further comprising a step of analyzing the MS1 spectrum with respect to at least one of
- identifying a target list of precursor ions to be subjected to a data-directed acquisition,
- determining, based on the relationship between m/z values and corresponding ion mobility ranges established in said MS1 spectrum, boundaries of two or more non-overlapping ejection windows to be used in a same first time interval during step B), such that the IM ranges associated with different ones of said ejection windows do not or at least not significantly overlap, and/or determining the timing of said second to (M+1)-th time intervals,
- determining precursor ions present in abundance, said method preferably further comprising a step of selectively ejecting abundant precursor ions identified in the MS1 measurement prior to step B).

9. The method according to one of the preceding claims, wherein said method is a method of data independent combined ion mobility and mass spectrometry analysis, said method comprising a step of associating detected fragments with its corresponding precursor ion, wherein said step of associating detected fragments with its corresponding precursor ion is preferably based at least in part on determining or utilizing the corresponding mass window and IM ranges associated with various occurrences of said fragment in said mass spectrometry measurement, wherein the occurrence of said fragment corresponds to a relative or absolute intensity of the fragment in the mass spectrometry measurement.

10. The method of one of the preceding claims, wherein said mass filter (26) is a quadrupole RF device (26), and/or wherein said mass spectrometry is carried out using a TOF mass analyzer (30), and/or further comprising a step of providing said precursor ions by separating precursor molecules from a sample and ionizing said precursor molecules, wherein said separation of precursor molecules from said sample is preferably carried out by chromatography, and most preferably by liquid chromatography, wherein said sample preferably comprises biological material, in particular one of peptides, lipids, metabolites or other small molecules in the mass range between 50 and 5000 Da, or synthetic compounds, such as drugs and their metabolites, and/or wherein said precursor ions are derived from a blood plasma or serum sample or from a sample formed by a single cell.

11. A method of combined ion mobility and mass spectrometry analysis, comprising cycles of the following steps:
O) introducing precursor ions into a high-capacity specific ejection (HCSE) trap (15), said HCSE trap (15) being configured for trapping ions within an m/z range of at least 400, preferably at least 600, and most preferably at least 800 for a time period of at least 0.3 s, preferably at least 1.5 s, and for selectively ejecting trapped ions according to their m/z ratio,
P) introducing precursor ions from said HCFC trap into an ion mobility separator (IMS) (16),
Q) sequentially releasing precursor ions from said IMS (16) according to their ion mobility,
R) introducing said released precursor ions into a mass filter (26) which selectively transmits precursor ions having m/z values falling within a controllable mass window,
S) fragmenting the precursor ions transmitted through said mass filter (26) to generate fragment ions, and
T) carrying out a mass spectrometry measurement on said fragment ions, wherein each fragment ion is associated with a mass window and an ion mobility (IM) range,
wherein said method further comprises
a step of carrying out MS1 mass spectrometry measurements in an operation mode, in which the mass filter (26) is deactivated or controlled to provide a mass window covering an m/z range of interest and the fragmentation is deactivated, such that all precursor ions sequentially released from the IMS (16) or at least those falling within said m/z range of interest, are subjected to mass spectrometry without fragmentation, to thereby obtain m/z spectra as a function of ion mobility of the precursor ions,
a step of analyzing the MS1 spectrum to determine abundant ions among said precursor ions, and
a step of selectively ejecting abundant precursor ions identified in the MS1 measurement prior to step P).

12. An apparatus (10) for combined ion mobility and mass spectrometry analysis, said apparatus comprising:
a high-capacity specific ejection (HCSE) trap (15), said HCSE trap (15) being configured for trapping ions within an m/z range of at least 400, preferably at least 600, and most preferably at least 800 for a time period of at least 0.3 s, preferably at least 1.5 s, and for selectively ejecting trapped ions according to their m/z ratio,
an ion mobility separator (IMS) (16) for receiving and sequentially releasing precursor ions from said IMS (16) according to their ion mobility,
a mass filter (26) arranged to receive said released precursor ions and to selectively transmit precursor ions having m/z values falling within a controllable mass window, a fragmentation device (28) for fragmenting the precursor ions transmitted through said mass filter (26) to generate fragment ions,
an apparatus for carrying out a mass spectrometry measurement on said fragment ions,
wherein each fragment ion is associated with a mass window and an ion mobility (IM) range, and a control system (32),
wherein said control system (32) is configured to control said HCSE trap (15), said IMS (16) and said mass filter (26) in a synchronized manner such as to carry out a method comprising the following steps:
A) introducing precursor ions into said high-capacity specific ejection (HCSE) trap (15),
B) selectively ejecting precursor ions having m/z values falling within at least one controllable ejection window from said HCSE trap (15) during a first time interval and introducing said ejected precursor ions into an ion mobility separator (IMS) (16),
C) sequentially releasing precursor ions from said IMS (16) according to their ion mobility,
D) introducing said released precursor ions into a mass filter (26) which selectively transmits precursor ions having m/z values falling within a controllable mass window,
E) fragmenting the precursor ions transmitted through said mass filter (26) to generate fragment ions, and
F) carrying out a mass spectrometry measurement on said fragment ions, wherein each fragment ion is associated with a mass window and an ion mobility (IM) range,
wherein the control system is further configured for controlling said at least one ejection window of said HCSE trap in step B) and said mass window of said mass filter applied in step D) in a synchronized manner such that
said HCSE trap (15) in step B) is caused to eject precursor ions having an m/z ratio falling into a first ejection window during said first time interval, and said mass window of said mass filter is controlled during a second time interval during step D) such as to completely lie within said first ejection window, or to overlap with said first ejection window by at least 90%,
wherein said second time interval is controlled relative to said first time interval such that, accounting for the ion mobility of precursor ions having an m/z ratio falling into said first ejection window, at least 50%, preferably at least 70% and most preferably at least 90% of these precursor ions ejected during said first time interval and falling into said first ejection window, are introduced to said mass separator (26) during said second time interval.

13. The apparatus (10) of claim 12, wherein said IMS (16) is one of a trapped IMS (TIMS) device, a drift type IMS device, and a travelling wave IMS device,
wherein said TIMS device (16) preferably comprises a first TIMS (20) and a second TIMS (22), wherein said first TIMS (20) is configured for constantly receiving precursor ions and transferring received precursor ions in a time controlled manner to the second TIMS (22), and said second TIMS (22) is configured for carrying out said IM scans in which precursor ions are successively released from said second TIMS (22) according to their ion mobility, and wherein preferably, in each IM scan, precursor ions of lower ion mobility are released prior to precursor ions of higher ion mobility, and/or
wherein said mass filter (26) is a quadrupole RF device (26), and/or wherein said apparatus for carrying out a mass spectrometry measurement on said fragment ions is a TOF mass analyzer (30).

14. The apparatus (10) of one of claims 12 or 13, further comprising an ion source (14), and/or
further comprising a bypass path bypassing said HCSE trap (15), wherein said bypass path (15c) preferably comprises a buffer (15d) storage or trapping region for accumulating precursor ions, and/or
wherein said control system (32) is configured to control said HCSE trap (15), said IMS (16) and said mass filter (26) in a synchronized manner such as to carry out a method according to one of claims 1 to 11.

15. An apparatus (10) for combined ion mobility and mass spectrometry analysis, said apparatus comprising:
a high-capacity specific ejection (HCSE) trap (15), said HCSE trap (15) being configured for trapping ions within an m/z range of at least 400, preferably at least 600, and most preferably at least 800 for a time period of at least 0.3 s, preferably at least 1.5 s, and for selectively ejecting trapped ions according to their m/z ratio,
an ion mobility separator (IMS) (16) for receiving and sequentially releasing precursor ions from said IMS (16) according to their ion mobility,
a mass filter (26) arranged to receive said released precursor ions and to selectively transmit precursor ions having m/z values falling within a controllable mass window,
a fragmentation device (28) for fragmenting the precursor ions transmitted through said mass filter (26) to generate fragment ions,
an apparatus for carrying out a mass spectrometry measurement on said fragment ions,
wherein each fragment ion is associated with a mass window and an ion mobility (IM) range, and a control system (32),
wherein said control system (32) is configured to control said HCSE trap (15), said IMS (16) and said mass filter (26) in a synchronized manner such as to carry out a method comprising the following steps:
O) introducing precursor ions into a high-capacity specific ejection (HCSE) trap (15), said HCSE trap (15) being configured for trapping ions within an m/z range of at least 400, preferably at least 600, and most preferably at least 800 for a time period of at least 0.3 s, preferably at least 1.5 s, and for selectively ejecting trapped ions according to their m/z ratio,
P) introducing precursor ions from said HCFC trap into an ion mobility separator (IMS) (16),
Q) sequentially releasing precursor ions from said IMS (16) according to their ion mobility,
R) introducing said released precursor ions into a mass filter (26) which selectively transmits precursor ions having m/z values falling within a controllable mass window,
S) fragmenting the precursor ions transmitted through said mass filter (26) to generate fragment ions, and
T) carrying out a mass spectrometry measurement on said fragment ions, wherein each fragment ion is associated with a mass window and an ion mobility (IM) range,
wherein said method further comprises a step of carrying out MS1 mass spectrometry measurements in an operation mode, in which the mass filter (26) is deactivated or controlled to provide a mass window covering an m/z range of interest and the fragmentation is deactivated, such that all precursor ions sequentially released from the IMS (16) or at least those falling within said m/z range of interest are subjected to mass spectrometry without fragmentation, to thereby obtain m/z spectra as a function of ion mobility of the precursor ions,
a step of analyzing the MS1 spectrum to determine abundant ions among said precursor ions, and
a step of selectively ejecting abundant precursor ions identified in the MS1 measurement prior to step P).
